# EUROPÄISCHE PATENTSCHRIFT

(11) **EP 0 875 298 B1**
(45) Veröffentlichungstag und Bekanntmachung des Hinweises auf die Patenterteilung: **04.07.2001**
(21) Anmeldenummer: 98106119.5
(22) Anmeldetag: 03.04.1998
(51) Int. Cl.: B05D 1/26

(54) **Verfahren und Vorrichtung zur Kunststoffbeschichtung von Metallband mittels Direkt-Extrusion**
Method and device for extrusion coating a metal strip with plastic
Procédé et dispositif pour doublage par extrusion-laminage

(30) Priorität: 02.05.1997 DE 19718588; 18.07.1997 DE 19730769
(43) Veröffentlichungstag der Anmeldung: 04.11.1998
(73) Patentinhaber: Rasselstein Hoesch GmbH, 56626 Andernach (DE)
(72) Erfinder: Sauer, Reiner, Dr., 56566 Neuwied (DE); Picker, Eberhard, 56579 Rengsdorf (DE)
(74) Vertreter: Rapp, Bertram, Dr.

(56) Entgegenhaltungen:
- DE-C- 831 311
- US-A- 3 957 940
- US-A- 5 407 702

## Beschreibung

Die Erfindung betrifft ein Verfahren zur Kunststoffbeschichtung von Metallband mittels Direkt-Extrusion, bei dem das Metallband in seiner Längsrichtung bewegt und erhitzt wird, mittels einer Breitschlitzdüse ein Film aus geschmolzenem, thermoplastischen Kunststoff unmittelbar auf die eine Seite des bewegten Bandes aufgebracht wird, dieser Kunststoffilm an das Metallband angedrückt wird, indem es durch einen Spalt zwischen zwei Rollen hindurchgeführt wird, von denen die am Kunststoffilm anliegende Rolle (Laminatorrolle) unter der Schmelztemperatur des Kunststoffes gehalten wird, gegebenenfalls die andere Seite des Metallbandes in gleichartiger Weise mit einem Kunststoffilm beschichtet wird und in einer abschließenden Nachbehandlung das beschichtete Metallband auf eine Temperatur im Bereich der Schmelztemperatur erhitzt und schließlich rasch auf eine Temperatur unter 40°C abgekühlt wird.

Ferner betrifft die Erfindung auch eine Vorrichtung zur Kunststoffbeschichtung von Metallband mittels Direkt-Extrusion.

Bei einem bekannten Verfahren der oben genannten Art (US 5 407 702, Fig. 3) wird ein Aluminiumband vor der Beschichtung mit PET (Polyäthylenterephthalat) auf eine Temperatur im Bereich von 204 - 260°C, vorzugsweise 215 - 246°C, erhitzt und durch den Spalt zwischen zwei Rollen hindurchgeführt. Vor dem Eintritt in den Spalt wird der flüssige Kunststoffilm auf eine Seite des Aluminiumbandes aufgebracht. Die auf den Kunststofffilm drückende Rolle ist eine Chromstahl-Rolle und wird auf einer Temperatur von 150 - 200°C gehalten. Die an der unbeschichteten Seite des Aluminiumbandes anliegende Rolle ist eine gummiummantelte Rolle und hat eine Oberflächentemperatur von 205°C, um das Aluminiumband auf Temperatur zu halten. Die Schichtdicke des aufgetragenen Kunststoffilmes soll etwa 8 - 20 µm, vorzugszugsweise 10 µm, betragen. Nachdem das einseitig beschichtete Aluminiumband das erste Rollenpaar verlassen hat, erfolgt mittels einer zweiten Breitschlitzdüse und einem zweiten, identischen Rollenpaar die Beschichtung auf der anderen Seite. Bei dieser Verfahrensweise ist zunächst die Haftung beider Kunststoffilme an dem Aluminiumband gering und gerade so groß, daß sich die Kunststofffilme im Laufe des weiteren Verfahrens nicht von dem Aluminiumband lösen, was mit "green peel strength" bezeichnet wird. Nachdem auf diese Weise das Aluminiumband auch auf der zweiten Seite beschichtet ist, wird es durch einen Induktions-Erhitzer geleitet, wo es auf etwa 215°C erhitzt wird. Durch diese Erhitzung soll die Verbindung zwischen den Kunststoffilmen und dem Aluminiumband vollendet werden. Anschließend wird das Verbundsystem durch Sprühdüsen zunächst auf eine Temperatur heruntergekühlt, die es erlaubt, das halbgekühlte, beschichtete Aluminiumband über eine Umlenkrolle in ein Wasserbad zu leiten, wo es dann auf eine Temperatur unter 40°C abgekühlt wird. Bei diesem bekannten Verfahren wird zwischen der am flüssigen Kunststoffilm anliegenden Rolle und dem Kunststoff nur Linienberührung oder Berührung über eine verhältnismäßig schmale Kontaktfläche erzielt. Die gekühlte Rolle ist also nur sehr kurze Zeit mit dem Kunststofffilm in Kontakt. Das Ablösen der Rollenoberfläche von dem Kunststoffilm darf aber erst erfolgen, wenn zumindest die Oberflächenschicht des Kunststoffilmes fest ist, da sonst der Kunststoff an der Rolle anhaftet und diese verschmutzt. Damit sich der Kunststoff im Spaltbereich ausreichend abkühlen kann, muß mit sehr geringer Bandgeschwindigkeit gearbeitet werden, die keine wirtschaftliche Produktion ermöglicht. Bei Baschichtung von einem Stahlband anstelle eines Aluminiumbandes und bei größeren Schichtdicken des Kunststoffilmes mit beispielsweise 200 µm wäre dieses Verfahren überhaupt nicht einsetzbar, da wegen der höheren Wärmekapazität und geringeren Wärmeleitfähigkeit des Stahlbandes und wegen der gröderen Schichtdicke des Kunststoffilmes die Wärme durch die nur mit Linienberührung anliegende Rolle nicht rasch genug abgeführt werden könnte. Außerdem wäre die Haftung zwischen dem Kunststoffilm und einem Stahlband nach dem Verlassen der Rollen nicht ausreichend, um bei größeren Filmdicken, bei denen bei Abkühlung große Schrumpfkräfte auftreten, ein Ablösen desselben vom Stahlband zu verhindern.

Die DE-C-831 311 beschreibt ein Verfahren zum Überziehen von Werkstoffbahnen ans Papier, Gewebe bzw. Metallfolie mit linearen polymeren Kunststoffen, wie Polyester, Polyesteramide, Polyanhydride, Polyether oder Mischungen hiervon. Hierbei wird die Werkstoffbahn in den Spalt zweier benachbarter, in entgegengesetzten Drehrichtungen umlaufender Walzen eingeführt und ein geschmolzener Film des linearen polymeren Kunststoffes nach unten dem Spalt zwischen den Walzen zugeführt, ohne vorher eine der Walzen zu berühren. Der geschmolzene Film und die Werkstoffbahn werden unter Druck durch den Spalt geführt. Dabei wird die mit dem Film in Berührung befindliche Walze auf einer Temperatur unterhalb des Verfestigungspunktes des geschmolzenen Filmes gehalten, um die freie Oberfläche des geschmolzenen Filmes rasch auf eine Temperatur unterhalb seines Verfesrigungspunktes abzukühlen. In dem vorgenannten Dokument ist darauf hingewiesen, daß die Temperatm der Werkstoffbahn an dem Berührungspunkt mit dem Film nicht von besonderer "' Bedeutung sei. Eine Temperatur von 100° bis 120° wird bevorzugt. Dabei ist jedoch auch angegeben, daß durch Vorerwärmen der Werkstoffbahn kein besonderer Vorteil erzielt werde. Ferner sind in der DE-C-831 311 keinerlei Angaben darüber gemacht, mit welchen Abkühlraten an der mit dem Film in Berührung befindlichen Walze gearbeitet werden soll.

Der Erfindung liegt deshalb die Aufgabe zugrunde, ein Verfahren der eingangs erwähnten Art aufzuzeigen, welches unter wirtschaftlichen Bedingungen, d.h. mit ausreichend hohen Bandgeschwindigkeiten, durchführbar ist und dabei eine ausgezeichnete Haftung zwischen Stahlband und Kunststoffilm ergibt, die auch beim Tiefziehen, insbesondere aber auch beim Sterilisieren, erhalten bleibt. Der Erfindung liegt außerdem die Aufgabe zugrunde, eine Vorrichtung zur Kunststoffbeschichtung von Metallband mittels Direkt-Extrusion zu schaffen, welches die Beschichtung von Metallbändern bei hohen Bandgeschwindigkeiten und mit ausgezeichneter Haftung zwischen Metallband und Kunststoffilm ermöglicht.

Das Verfahren ist nach der Erfindung dadurch gekennzeichnet, daß bei der Beschichtung eines Stahlbandes dieses auf eine solche Temperatur erhitzt wird, daß es im Auftragsbereich des flüssigen Kunststoffilmes eine um mindestens 10°C über dem Schmelzpunkt des jeweiligen Kunststoffes liegende Temperatur aufweist,
daß zwischen der an den Kunststoffilm angedrückten Rolle (Laminatorrolle) oder einem an den Kunststoffilm angedrückten, endlosen Band (Laminatorband) Flächenkontakt herbeigeführt wird und dieser Flächenkontakt durch synchrone Weiterbewegung der sich kontaktierenden Oberflächen von Kunststoffilm und Laminatorrolle bzw. Laminatorband über eine Kontaktzeit bzw. Kontaktlänge aufrechterhalten wird, die ausreicht, um bei einer Bandgeschwindigkeit von mindestens 50 m/min zumindest die Oberflächenschicht des Kunststoffilmes mit einer Kühlrate von höchstens 400 W/m²°C auf eine Temperatur abzukühlen, die mindestens um 30°C unter dem Schmelzpunkt des jeweiligen Kunststoffes liegt, bevor der Kontakt zwischen Kunststoffilm und Laminatorrolle bzw. Laminatorband gelöst wird.

Vorteilhafte Verfahrensmaßnahmen sind in den Unteransprüchen 2 - 12 angegeben.

Erfindungsgemäße Vorrichtungen zur Kunststoffbeschichtung von Metallband mittels Direkt-Extrusion sind in den Ansprüchen 13 - 20 gekennzeichnet.

Beim Beschichten wird der flüssige Kunststoffilm direkt auf das Stahlband extrudiert. Dann erfolgt ein Andrücken des Kunststoffilmes auf das Stahlband durch die Laminatorrolle bzw. das Laminatorband. Die Laminatorrolle bzw. das Laminatorband übernimmt dann die Aufgabe der Abkühlung des Kunststoffilmes, um ihn aus der flüssigen Phase in die feste Phase zu überführen. Die Laminatorrolle bzw. das Laminatorband, die im folgenden der Einfachheit halber nur als Laminator bezeichnet sind, können durch ihre Oberflächenstruktur außerdem zur Gestaltung der Oberfläche des Kunststoffilmes dienen. Beim Abkühlen des Kunststoffilmes erfährt dieser eine Querschrumpfung, die chne das Ergreifen von besonderen Maßnahmen zum Ablösen des Kunststoffilmes vom Stahlband führen würde. Dies ist insbesondere dann der Fall, wenn der Kunststoffilm eine größere Dicke von bis zu 200 µm aufweist. Es muß sichergestellt werden, daß die Haftungskräfte im Verbund von Stahlband und Kunststoffilm beim Abkühlen schneller wachsen als die Schrumpfkräfte im Kunststofffilm. Hierzu sind besondere Maßnahmen erforderlich, nämlich Aufheizen des Stahlbandes, so daß im Auftragsbereich des flüssigen Kunststoffilmes Temperaturen oberhalb des Kunststoffschmelzpunktes vorliegen (z.B. für PP(Polypropylen): 190°C, für PET (Polyäthylenterephthalat):290°C und für PE (Polyäthylen): 130°C), Anpressen des flüssigen Kunststoffilmes an das Stahlband mit ausreichender Kontaktzeit bzw. Kontaktlänge und ausreichender Anpreßkraft sowie einer durch den Laminator bewirkten Abkühlgeschwindigkeit, die nicht mehr als 400 W/m²°C beträgt.

Das Ablösen des Laminators vom Kunststoffilm darf erst erfolgen, wenn zumindest die Oberflächenschicht des Kunststoffilmes durch Abkühlung in festem Zustand überführt ist. Die Haftung des Kunststoffilmes zum Stahlband muß größer sein als die zum Laminator. Andernfalls kommt es zu einer Anhaftung von Kunststoffpartikeln am Laminator, was nicht nur zu einer Verschmutzung des Laminators, sondern zu einem kurzzeitigen Ablösen des Kunststoffilmes vom Stahlband und zu einem irreversiblen Haftungsverlust, sowie eventueller Querschrumpfung führt.

Um bei Bandgeschwindigkeiten von über 50 m/min und vorzugsweise mehr, die eine rationelle Produktion erlauben, eine genügende Abkühlung des Kunststoffilmes zu erzielen, sieht die Erfindung vor, daß der Kunststoffilm während das Stahlband weiterbewegt wird, durch Flächenberührung zwischen Kunststoffilm und Laminator während der zur Abkühlung benötigten Zeit über eine ausreichende Kontaktlänge in Anlage am Laminator gehalten und gleichzeitig an das Stahlband angedrückt wird. Eine längere Kontaktzeit und größere Kontaktlänge (in Bandbewegungsrichtung) ist insbesondere erforderlich, um bei größeren Filmdicken von beispielsweise 200 µm und einer gegenüber Aluminium wesentlich geringeren Wärmeleitfähigkeit sowie einer höheren Wärmekapazität des Stahlbandes zumindest die am Laminator anliegende Oberflächenschicht des Kunststoffilmes durch Abkühlung in festen Zustand zu überführen.

Bei der Abkühlung des Kunststoffilmes durch den Laminator sollte die Kühlrate nicht hoher sein als 400 W/m²°C, da sonst insbesondere bei den genannten großen Filmdicken durch zu rasche Querschrumpfung des Kunststoffilmes sich dieser teilweise vom Stahlband löst und ein Haftungsverlust eintritt.

Damit der flüssige Kunststoffilm in ausreichendem Maße an das Stahlband durch den Laminator angedrückt wird, sollte dies mit einer Kraft von mindestens 60 N/mm Stahlbandbreite erfolgen.

Damit die Haftung zwischen dem Kunststoffilm und dem Stahlband verbessert wird, muß eine ausreichende Reaktionszeit zwischen dem flüssigen Kunststoff und der Oberfläche des erhitzten Stahlbandes vorhanden sein. Um dies zu erreichen, sollte die Temperatur des Stahlbandes im Auftragsbereich des Kunststoffilmes mindestens um 10°C, vorzugsweise jedoch um 20°C und mehr, über dem Schmelzpunkt des jeweiligen Kunststoffes liegen.

Eine genügend lange Kontaktzeit zwischen Kunststoffilm und Laminator kann dadurch erreicht werden, daß man das Stahlband mit dem an einer Laminatorrolle anliegenden Kunststoffilm mit Spannung über einen Teil des Umfanges der Laminatorrolle herumführt.

Ein endloses Laminatorband wird ebenfalls mit Spannung zusammen mit dem beschichteten Stahlband um einen Teil des Umfanges einer Rolle herumgeführt, wobei der am Laminatorband anliegende, abzukühlende Kunststoffilm so lange am Laminatorband gehalten wird, bis zumindest seine Oberflächenschicht in den festen Zustand überführt ist. Die Abkühlung erfolgt in diesem Fall einerseits durch das Laminatorband, welches zweckmäßig aus Stahl bestehen kann, und andererseits durch die teilweise umschlungene Rolle.

Diese Methode eignet sich besonders für die zweiseitige Beschichtung von Stahlbändern, wobei die umschlungene Rolle als gekühlte Laminatorrolle ausgebildet ist, welche den ersten Kunststoffilm an eine Seite des Stahlbandes andrückt, während der zweite Kunststoffilm an der anderen Seite des Stahlbandes durch das Laminatorband angedrückt und abgekühlt wird.

Aus den oben genannten Gründen soll beim Abkühlen des Kunststoffilmes mittels der Laminatoren die Kühlrate (Wärmeübergangszahl) nicht größer sein als 400 W/m²°C, um die gewünschte hohe Haftung zu gewährleisten. Diese Kühlrate reicht jedoch nicht aus, um insbesondere bei PP das Kristallit- bzw. Sphärolith-Wachstum klein zu halten. Das Überschreiten eines kritischen Sphärolit-Durchmessers führt bei PP zu einer Trübung des Kunststoffilmes und zu sogenanntem Weißbruch bei der Umformung des beschichteten Stahlbandes zu einer Verpackung. Dies gilt in geringerem Maße auch für PET, dessen Sphärolit-Wachstumsgeschwindigkeit jedoch wesentlich geringer ist als die des PP. Trotzdem wird auch bei PET ein Kunststoffilm in amorpher Form mit möglichst wenigen Kristalliten angestrebt, um eine hohe Verformbarkeit zu gewährleisten. Um eine Verkleinerung der Sphärolithe bzw. eine amorphe Struktur zu erzielen, wird das fertig beschichtete Stahlband nach dem Laminator auf eine Temperatur oberhalb des Schmelzpunktes des jeweiligen Kunststoffes erhitzt, z.B. bei PP über 200°C, bei PET über 300°C. Anschließend muß eine schnelle Abkühlung durch Abschrecken in Wasser auf Raumtemperatur erfolgen, damit bei Unterschreitung der Kristallisationstemperatur, die dicht unter dem Erweichungspunkt liegt, kein erneutes Kristallwachstum (Sphärolithwachstum) auftritt. Für Homo-PP sollte die Kühlrate mindestens 200°C/s, für ein Random-PP mindestens 100°C/s betragen. Um dies zu erreichen, müssen im Wasser Wärmeübergangszahlen zum beschichteten Stahlband von mindestens 3000 W/m²°C bzw. mindestens 1800 W/m²°C erzeugt werden. Dies bedeutet, daß hohe Relativgeschwindigkeiten zwischen dem beschichteten Metallband und dem Wasser vorliegen müssen (30 - 100 m/min), um einen turbulenten Stoff- bzw. Wärmetransport sicherzustellen.

Beim beidseitigen Beschichten mit Kunststoffen mit unterschiedlichen Schmelzpunkten ist darauf zu achten, daß der Kunststoff, der zuerst aufgetragen wird, den höheren Schmelzpunkt besitzt, da am Anfang das Stahlband die höchste Temperatur hat. Wenn der zuerst aufgebrachte Kunststoffilm, z.B. PET, durch einen ersten Laminator an das Stahlband angedrückt und dabei abgekühlt wurde, wird dabei gleichzeitig auch das Stahlband auf eine niedrigere Temperatur abgekühlt. Solange jedoch die Temperatur des Stahlbandes über dem Schmelzpunkt des zweiten Kunststoffilmes, z.B. PP, liegt, wird der PP-Kunststoffilm auf das nunmehr kühlere Stahlband extrudiert. Die Bandtemperaturdifferenz für die beiden Beschichtungen von PET und PP beträgt ca. 100°C.

Der Auftrag des flüssigen Kunststoffes auf das Stahlband erfolgt mittels einer Breitschlitzdüse, zweckmäßig in einer Breite, die größer ist als die Breite des Stahlbandes. Die Dicke des austretenden Kunststofffilmes wird durch die Einstellung des Spaltes der Düse bestimmt. Da das Stahlband gegenüber der Düsenaustrittsgeschwindigkeit eine höhere Bandgeschwindigkeit besitzt, wird der Kunststoffilm in die Länge gezogen und dünner. Es findet dabei auch eine Breitenreduktion statt, die zu einer ungleichmäßigen Dickenverteilung des Filmes über dessen Breite führt. Die Randzonen sind dicker als der Mittelbereich. Deswegen wird ein Kunststoffilm erzeugt, dessen Breite größer ist als die des Stahlbandes, so daß die dickeren Randzonen am Stahlband ca. 20 - 30 mm überstehen. Um eine der Laminatorrolle gegenüberstehende Andrückrolle vor Verschmutzung durch überstehenden Kunststoffilm zu schützen, werden an beiden Längsrändern des Stahlbandes endlose Teflonbänder im Auftragsbereich und daran anschließend synchron mit dem Stahlband mitgeführt, bis die seitlich über das Stahlband überstehenden Abschnitte des Kunststoffilmes ausreichend unter den Schmelzpunkt abgekühlt sind. Nach dem Festwerden des Kunststoffilmes erfolgt die Besäumung der am Stahlband überstehenden Kunststoffilme. Sind die Kunststoffilme an beiden Stahlbandseiten unterschiedlich, so werden sie separat abgesaugt, um sie dem Recycling zuzuführen.

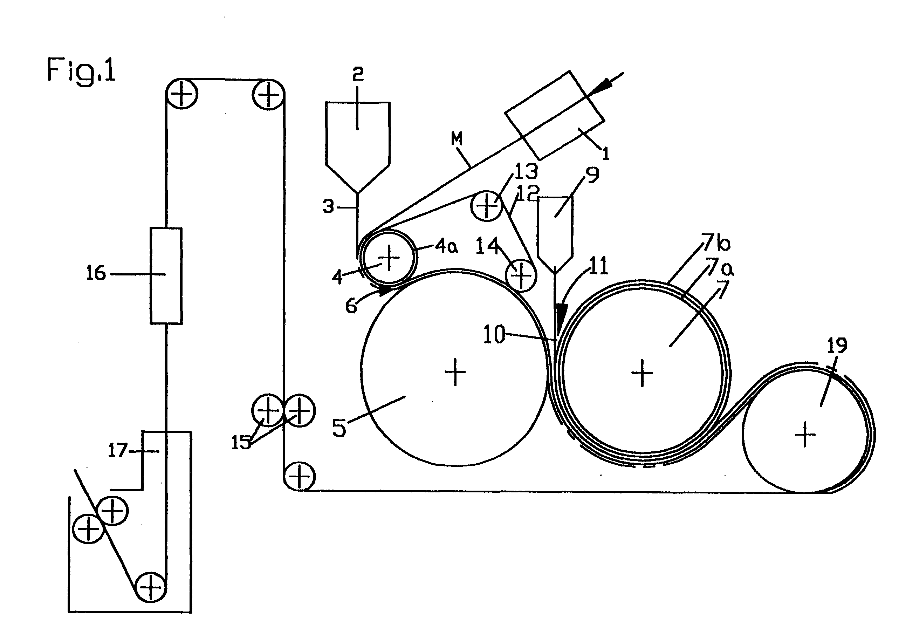

Erfindungsgemäße Vorrichtungen zur beidseitigen Kunststoffbeschichtung eines Metallbandes mittels Direkt-Extrusion sind in folgendem, anhand von in den Figuren 1 - 2 der Zeichnung schematisch dargestellten Ausführungsbeispiele näher erläutert.

Bei beiden Ausführungsbeispielen sind die Erhitzungseinrichtung, die Einrichtung zur Nacherwärmung des beschichteten Stahlbandes und die Kühleinrichtung die gleiche, weshalb sie nur bei dem in Figur 1 dargestellten Ausführungsbeispiel näher erläutert sind. Das Metallband ist vorzugsweise ein Stahlband, welches durch Verzinnung, Verchromung oder Konversionsbesichtung auch oberflächenbehandelt sein kann. Mit den erfindungsgemäßen Vorrichtungen lassen sich jedoch auch andere Metallbänder, beispielsweise Aluminiumbänder, beschichten. Das Metallband kann eine Dicke von 0,05 - 0,5 mm aufweisen. Zur Beschichtung können thermoplastische Kunststoffe, wie PET, Homo-PP, Block-PP, Random-PP und PE, verwendet werden. Die Filmdicke kann dabei auf einer Seite 5 - 200 µm und auf der anderen Seite 3 - 10 µm oder auch mehr betragen. Es können beide Seiten des Metallbandes mit gleichen oder auch unterschiedlichen Kunststoffen, je nach Einsatzzweck, beschichtet werden. Es kann mit Bandgeschwindigkeiten von 50 - 400 m/min gearbeitet werden.

Gemäß Figur 1 wird das Metallband M zunächst durch eine Erhitzungseinrichtung 1 hindurchgeführt. An diese schließt sich eine erste Beschichtungsstation an. Diese weist eine erste Breitschlitzdüse 2 zum direkten Auftrag des geschmolzenen thermoplastischen Kunststoffes in Form eines ersten flüssigen Kunststoffilmes 3 auf die erste Seite des erhitzten Metallbandes M auf. Der Kunststoffilm kann in bekannter Weise aus zwei Schichten bestehen. Die zum Metallband orientierte Schicht kann insbesondere bei einem Stahlband die Haftung des Kunststoffilmes zum Stahlband sicherstellen. Die äußere Schicht ist für die Füllgutintegrität der aus dem beschichteten Metallband hergestellten Verpackung oder deren Resistenz gegenüber äußeren Belastungen auszuwählen. Zum Erzeugen eines Kunststoffilmes mit Zweischichtaufbau können beide Schichten gleichzeitig aus der gleichen Breitschlitzdüse extrudiert werden, was an sich bekannt ist und daher nicht näher beschrieben wird. Hinter der Breitschlitzdüse 2 sind zwei aneinandergedrückte Rollen 4, 5 vorgesehen. Die Rolle 4, welche in folgendem als Andrückrolle bezeichnet wird, weist einen Mantel 4a aus gummielastischem Material auf. Die andere Rolle 5, welche in folgendem als Laminatorrolle bezeichnet wird, wird durch gekühltes Wasser, welches das Innere der Laminatorrolle 5 durchströmt, gekühlt. Das Metallband 1 mit dem noch flüssigen Kunststoffilm 3 wird durch einen Spalt 6 zwischen den beiden Rollen 4, 5 hindurchgeführt und dabei durch die Laminatorrolle 5 an das Metallband M angedrückt. Das Anpressen des flüssigen Kunststoffilmes 3 an das Metallband M sollte mit einer auf die Breite des Stahlbandes bezogenen Kraft von mindestens 60 N/mm erfolgen. Die Abkühlgeschwindigkeit der Laminatorrolle 5 ist so einzustellen, daß eine Kühlrate von höchstens 400 W/m²°C erzielt wird. Während der Kunststoffilm 3 an der Laminatorrolle 5 anliegt, muß zumindest seine Oberflächenschicht durch Abkühlung in den festen Zustand überführt werden, bevor die Oberfläche der Laminatorrolle 1 von dem Kunststoffilm gelöst wird. Deshalb ist eine zweite gekühlte Laminatorrolle 7 so angeordnet, daß das Metallband M die vorhergehende erste Laminatorrolle 5 an einem Teil ihres Umfanges umschlingt und das Metallband mit dem noch flüssigen, an der Laminatorrolle 5 anliegenden ersten Kunststoffilm im Anschluß an den ersten Spalt 6 über einen Teil des Umfanges der Laminatorrolle 5 in Anlage an dieser gehalten wird. Die zweite Laminatorrolle 7 steht der ersten Laminatorrolle 5 gegenüber und ist an diese andrückbar. Vor der zweiten Laminatorrolle 7 ist eine zweite Breitschlitzdüse 9 angeordnet, mit der ein zweiter flüssiger Kunststoffilm 10 auf die zweite Seite des Metallbandes extrudiert werden kann. Dieser wird dann in der vorher beschriebenen Weise mittels der gekühlten Laminatorrolle 7 an die zweite Seite des Metallbandes angedrückt. Die Breitschlitzdüse 9, die Laminatorrolle 7 und die Laminatorrolle 8 bilden zusammen die zweite Beschichtungsstation. In Bandlaufrichtung hinter der zweiten Laminatorrolle 7 ist eine Umlenkrolle 19, die ebenfalls als Kühlrolle ausgebildet sein kann, wiederum so angeordnet, daß das Metallband M die vorhergehende zweite Laminatorrolle 7 an einem Teil ihres Umfanges umschlingt und das Metallband mit dem noch flüssigen, an der Laminatorrolle 7 anliegenden Kunststoffilm 10 im Anschluß an den zweiten Spalt 11 über einen Teil des Umfanges der zweiten Laminatorrolle in Anlage an dieser gehalten wird, bis zumindest die an der Laminatorrolle 7 anliegende Oberflächenschicht des zweiten Kunststoffilmes 10 in den festen Zustand abgekühlt wurde. Die Länge der Umschlingung jeder Laminatorrolle 5, 7 oder auch die Kontaktlänge hängt ab von der Bandgeschwindigkeit, der Dicke und Art des Metallbandes, der Dicke der Kunststoffilme und der Temperatur der Laminatorrollen. Experimente mit einem Stahlband von 0,26 mm Dicke und einem PP-Kunststoffilm von 200 µm Dicke ergaben, daß bei einer Temperatur der Laminatorrolle von 40°C die Kontaktzeit an der Laminatorrolle 60 ms und die Kontaktlänge, mit der der Kunststofffilm an der Kontaktrolle in Anlage gehalten werden muß, 200 mm betragen muß, bei einer Bandgeschwindigkeit von 200 m/min. Liegt die Temperatur der Laminatorrolle bei 60°, dann muß die Kontaktzeit 80 ms und die entsprechende Kontaktlänge 270 mm betragen.

Um im Spalt 11 für einen elastischen Spaltausgleich zu sorgen, falls Toleranzen in der Filmdicke auftreten, kann zweckmäßig die zweite Laminatorrolle 7 einen Mantel 7a aus gummielastischem Material aufweisen, der konzentrisch von einem dünnen, in radialer Richtung nachgiebigen, äußeren Stahlmantel 7b umgeben ist. Durch die Verwendung eines Stahlmantels 7b wird verhindert, daß die zweite Laminatorrolle 7 auf dem ersten Kunststoffilm 3 eine unerwünschte Musterung hinterläßt, die dann auftreten kann, wenn der Mantel aus gummielastischem Material direkt am Kunststoffilm anliegen würde.

Aus Gründen, die bei der Beschreibung des Verfahrens schon näher erläutert worden sind, ist die Breite der Breitschlitzdüse 2 größer als die Breite des Metallbandes M. Dies führt dazu, daß der Kunststoffilm 3 auf jeder Seite des Metallbandes M um 20 bis 30 mm vorsteht. Der flüssige Kunststoffilm würde an der Andrückrolle 4 anhaften. Um dies zu verhindern, sind beidseitig des Stahlbandes M endlose Teflonbänder vorgesehen, die über die Andrückrolle 4 und zwei Umlenkrollen 13, 14 geführt sind. Die Umlenkrolle 14 ist dabei ebenfalls so angeordnet, daß der überstehende Kunststoffilm an die Laminatorrolle 5 so lange angedrückt wird, bis er durch Abkühlung in festen Zustand überführt wurde. Die Trennung des überstehenden Kunststoffilmes von den Teflonbändern 12 erfolgt also auch erst nach dem Abkühlen und Festwerden des Kunststoffes. Der überstehende Teil der Kunststoffilme wird später mittels Besäumrollen 15, die an beiden Seiten des beschichteten Metallbandes angeordnet sind, abgeschnitten und einer Wiederverwendung zugeführt.

Bei der Beschreibung des Verfahrens wurde ausführlich erläutert, daß eine Nachbehandlung des beschichteten Metallbandes durch Erhitzung und anschließende rasche Abkühlung in einem Wasserbad erforderlich sind. Dies erfolgt mittels der nur in Figur 1 dargestellten Erhitzungseinrichtung 16 und der anschließendan, aus einem Wasserbad bestehenden Kühleinrichtung 17.

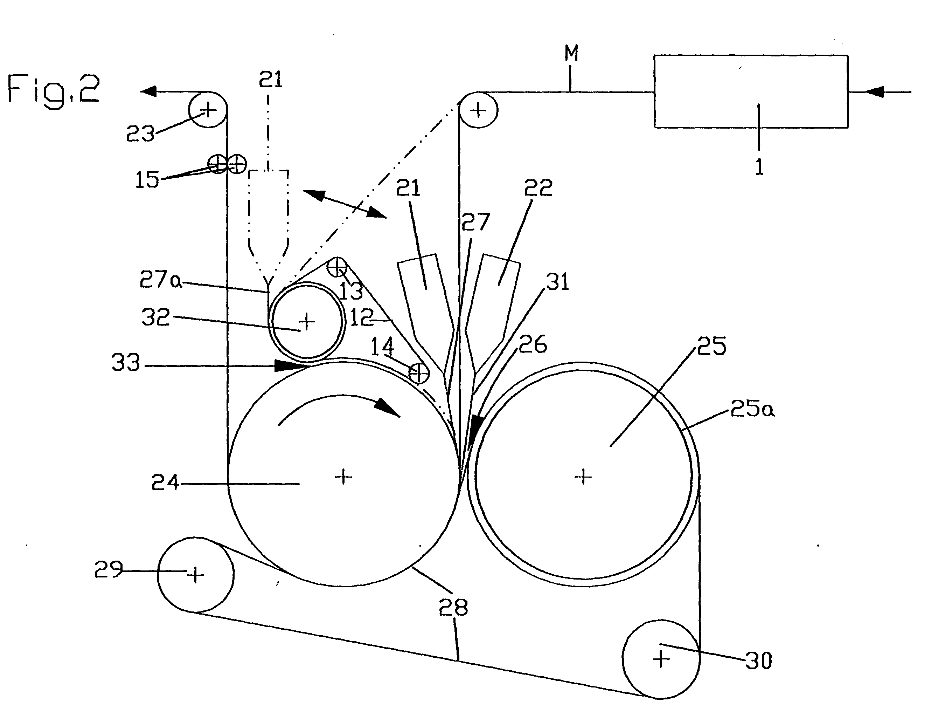

Das in Figur 2 dargestellte Ausführungsbeispiel entspricht im wesentlichen dem vorhergehend beschriebenen Ausführungsbeispiel. Einrichtungen und Teile gleicher Funktion sind daher mit den gleichen Bezugszeichen bezeichnet. Zur Vermeidung von Wiederholungen wird auf die zu Figur 1 gemachten Ausführungen verwiesen.

Bei der in Figur 2 dargestellten Lösung ist eine erste Breitschlitzdüse 21 an der ersten Seite des Metallbandes M angeordnet und eine zweite Breitschlitzdüse 22 an der gegenüberliegenden Seite desselben. Unterhalb der beiden Breitschlitzdüsen 21, 22 befinden sich nebeneinander eine erste Laminatorrolle 24 und eine zweite Laminatorrolle 25, die zweckmäßig mittels Wasser kühlbar sind, so daß sie auf eine Temperatur von 20 - 80°C einstellbar sind. Der ersten Laminatorrolle 24 ist eine Umlenkrolle 23 nachgeschaltet, die dafür sorgt, daß das Metallband in diesem Fall um 180° die Laminatorrolle 1 im Anschluß an den zwischen den beiden aneinandergedrückten Laminatorrollen 24, 25 gebildeten Spalt 26 umschlingt. Auf diese Weise wird sichergestellt, daß der mittels der ersten Breitschlitzdüse 21 extrudierte erste Kunststoffilm 27 zunächst im Spalt 26 durch die gegenüberstehenden Laminatorrollen 24 und 25 an das Metallband M angedrückt und dann das Metallband mit dem zunächst noch flüssigen ersten Kunststoffilm 27 im Anschluß an den Spalt 26 in Anlage an der ersten Laminatorrolle 24 gehalten wird bis der erste Kunststoffilm 27 durch die Laminatorrolle 24 abgekühlt und in festen Zustand überführt ist. Erst dann erfolgt die Ablösung des fest am Metallband M haftenden ersten Kunststoffilmes 27 von der Oberfläche der Laminatorrolle 24.

Ein endloses Laminatorband 28, welches zueckmäßig aus Stahl besteht, ist über die zweite Laminatorrolle 25, die zweckmäßig einen gummielastischen Mantel 25a aufweist, geführt. Ferner sind zur Führung des Laminatorbandes 28 zwei Umlenkrollen 29, 30 vorgesehen, die zweckmäßig als Kühlrollen ausgebildet sind. Die Umlenkrolle 29 ist so angeordnet, daß das Laminatorband die erste Laminatorrolle 24 in demjenigen Bereich umschlingt, in dem die Laminatorrolle 24 auch von dem Metallband M umschlungen wird. Auf diese Weise kann der durch die zweite Breitschlitzdüse 22 extrudierte zweite Kunststoffilm 31 durch die zweite Laminatorrolle 25 unter Zwischenschaltung des Laminatorbandes 28 im Spalt 26 an das Metallband angedrückt werden. Im Anschluß an den Spalt 26 wird dann der zweite Kunststoffilm 31 weiterhin während der teilweisen Umschlingung der ersten Laminatorrolle 24 an das Metallband M angedrückt bis der zweite Kunststoffilm in einen festen Zustand abgekühlt ist. Die Abkühlung erfolgt dabei durch das mittels der Kühlrollen 29, 30 und der zweiten Laminatorrolle 25 gekühlte Laminatorband 28. Zusätzliche Kühlung erfolgt durch die erste Laminatorrolle 24. Diese Arbeitsueise wird gewählt, wenn auf beide Seiten des Metallbandes gleiche Kunststoffe mit gleichen Schmelzpunkten aufgetragen werden sollen, z.B. beidseitig PET oder beidseitig PP.

Wie aus Figur 2 erkennbar ist, ist der ersten Laminatorrolle 24 auch eine Andrückrolle 32 zugeordnet, die zweckmäßig einen Mantel aus gummielastischem Material besitzt. Die Laminatorrolle 32 ist in Umfangsrichtung der ersten Laminatorrolle in größerem Abstand von dem zwischen den beiden Laminatorrollen 24, 25 gebildeten Spalt 26 angeordnet. Die erste Breitschlitzdüse 21 ist aus ihrer ersten, in Figur 2 voll ausgezogenen Gießposition in eine zweite, in Figur 2 strichpunktiert dargestellte Gießposition verstellbar. Wenn auf die beiden Seiten des Metallbandes M Kunststoff mit unterschiedlichen Schmelzpunkten aufgetragen werden sollen, z.B. auf die erste Seite PET und auf die zweite Seite PP, dann wird die erste Breitschlitzdüse in ihre zweite, strichpunktiert dargestellte, Gießposition gebracht. Das Stahlband wird dann, wie es in Figur 2 ebenfalls strichpunktiert dargestellt ist, um die Andrückrolle 32 und durch den zwischen Andrückrolle 32 und der ersten Laminatorrolle 24 gebildeten Spalt 33 geführt. Mittels der ersten Breitschlitzdüse 21 wird der Kunststoff mit dem höheren Schmelzpunkt, z.B. PET (Schmelztemperatur 280°C), im Bereich der Andrückrolle 32 auf das Stahlband M extrudiert. Im Spalt 33 wird der noch flüssige Kunststoffilm 27a durch die Laminatorrolle 24 an die erste Seite des Metallbandes angedrückt.

Ähnlich wie bei dem in Figur 1 dargestellten und beschriebenen Ausführungsbeispiel wird nach dem Spalt 33 der erste Kunststoffilm 27a durch das Metallband weiterhin in Anlage an der Laminatorrolle 24 gehalten und abgekühlt. Dabei kühlt sich auch das Metallband ab. Der Abstand zwischen der Andrückrolle 32 und dem Spalt 26 ist so gewählt, daß das Metallband im Spalt 26 noch immer eine über der Schmelztemperatur des zweiten Kunststoffilmes, z.B. PP (Schmelztemperatur 140 - 160°C) liegt. Mittels der zweiten Breitschlitzdüse 22 erfolgt dann die Beschichtung der zweiten Seite des Metallbandes M mit dem aus PP bestehenden zweiten flüssigen Kunststoffilm 31 in der vorher beschriebenen Weise.

Um eine Verschmutzung der Andrückrolle 32 zu vermeiden, sind auch hier im Bereich der Andrückrolle 32 endlose Teflonbänder 12 vorgesehen, die in Aufbau und Funktion den in Figur 1 dargestellten Teflonbändern 12 entsprechen. Die hierzu in Verbindung mit Figur 1 gegebene Beschreibung ist sinngemäß auch auf Figur 2 anzuwenden. Das gleiche gilt bezüglich der in Figur 2 nicht dargestellten Nacherhitzungseinrichtung und Kühleinrichtung.

## Patentansprüche

1. Verfahren zur Kunststoffbeschichtung von Metallband mittels Direkt-Extrusion, bei dem das Metallband in seiner Längsrichtung bewegt und erhitzt wird, mittels einer Breitschlitzdüse ein Film aus geschmolzenem, thermoplastischem Kunststoff unmittelbar auf die eine Seite des bewegten Metallbandes aufgebracht wird, dieser Kunststoffilm an das Metallband angedrückt wird, indem es durch einen Spalt zwischen zwei Rollen hindurchgeführt wird, von denen die am Kunststoffilm anliegende Rolle, Laminatorrolle, unter der Schmelztemperatur des Kunststoffes gehalten wird, gegebenenfalls die andere Seite des Metallbandes in gleichartiger Weise mit einem Kunststoffilm beschichtet wird und in einer abschließenden Nachbehandlung das beschichtete Metallband auf eine Temperatur im Bereich der Schmelztemperatur erhitzt und schließlich rasch auf eine Temperatur unter 40°C abgekühlt wird, **dadurch gekennzeichnet,**
daß bei Beschichtung eines Stahlbandes dieses auf eine solche Temperatur erhitzt wird, daß es im Auftragsbereich des flüssigen Kunststoffilmes eine um mindestens 10°C über dem Schmelzpunkt des jeweiligen Kunststoffes liegende Temperatur aufweist,
daß zwischen der an den Kunststoffilm angedrückten Rolle, Laminatorrolle, oder einem an den Kunststofffilm angedrückten, endlosen Band, Laminatorband, Flächenkontakt herbeigeführt wird und dieser Flächenkontakt durch synchrone Weiterbewegung der sich kontaktierenden Oberflächen von Kunststoffilm und Laminatorrolle bzw. Laminatorband über eine Kontaktzeit bzw. Kontaktlänge aufrechterhalten wird, die ausreicht, um bei einer Bandgeschwindigkeit von mindestens 50 m/min zumindest die Oberflächenschicht des Kunststoffilmes mit einer Kühlrate von höchstens 400 W/m²°C auf eine Temperatur abzukühlen, die mindestens um 30°C unter dem Schmelzpunkt des jeweiligen Kunststoffes liegt, bevor der Kontakt zwischen Kunststoffilm und Laminatorrolle bzw. Laminatorband gelöst wird.

2. Verfahren nach Anspruch 1, **dadurch gekennzeichnet,** daß das Andrücken des flüssigen Kunststofffilmes an das Stahlband mittels der Laminatorrolle bzw. des Laminatorbandes mit einer Kraft von mindestens 60 N/mm, bezogen auf die Breite des Stahlbandes, erfolgt.

3. Verfahren nach Anspruch 1 oder 3, **dadurch gekennzeichnet,** daß das Stahlband mit dem an der Laminatorrolle anliegenden Kunststoffilm unter Spannung über einen Teil des Umfanges der Laminatorrolle herumgeführt und an der Laminatorrolle in Anlage gehalten wird.

4. Verfahren nach einem der Ansprüche 1 bis 3, **dadurch gekennzeichnet,** daß ein endloses Laminatorband mit Spannung zusammen mit dem beschichteten Stahlband um einen Teil des Umfanges einer Rolle herumgeführt wird, wobei der abzukühlende Kunststoffilm am Laminatorband anliegt.

5. Verfahren nach Anspruch 4, **dadurch gekennzeichnet,** daß ein Laminatorband aus Stahl verwendet wird.

6. Verfahren nach einem der Ansprüche 1 bis 3, **dadurch gekennzeichnet,** daß die Kühlung der Laminatorrolle durch Wasser erfolgt, welches durch die Rolle hindurchgeleitet wird.

7. Verfahren nach Anspruch 6, **dadurch gekennzeichnet,** daß die Laminatorrollen durch Kühlung auf ainer Temperatur im Bereich von 20 bis 80°C gehalten werden.

8. Verfahren nach einem der Ansprüche 1 bis 7, **dadurch gekennzeichnet,** daß bei der Nachbehandlung das Stahlband auf eine Temperatur oberhalb des Schmelzpunktes des jeweiligen Kunststoffes erhitzt wird und der Kunststoffilm durch unmittelbares Einleiten des Stahlbandes in ein Wasserbad mit hoher Kühlrate auf Raumtemperatur abgeschreckt wird.

9. Verfahren nach Anspruch 8, **dadurch gekennzeichnet,** daß das rasche Abkühlen bei Homo-PP mit einer Kühlrate von mindestens 3000 W/m²°C auf eine Temperatur unter 20°C erfolgt.

10. Verfahren nach Anspruch 8, **dadurch gekennzeichnet,** daß das rasche Abkühlen bei Random-PP mit einer Kühlrate von mindestens 1800 W/m²°C auf eine Temperatur unter 20°C erfolgt.

11. Verfahren nach einem der Ansprüche 1 bis 10, **dadurch gekennzeichnet,** daß bei beidseitiger Beschichtung des Stahlbandes der Kunststoffilm mit dem höheren Schmelzpunkt zuerst auf das Stahlband aufgebracht wird.

12. Verfahren nach einem der Ansprüche 1 bis 11, **dadurch gekennzeichnet,** daß die Extrusion des Kunststoffes aus der Breitschlitzdüse in einer Breite erfolgt, die größer ist als die Breite des Stahlbandes, und daß an beiden Längsrändern des Stahlbandes endlose Teflonbänder im Auftragsbereich und daran anschliessend synchron mit dem Stahlband mitgeführt werden, bis die seitlich über das Stahlband überstehenden Abschnitte des Kunststoffilmes ausreichend unter den Schmelzpunkt abgekühlt sind.

13. Vorrichtung zur beidseitigen Kunststoffbeschichtung eines Metallbandes mittels Direkt-Extrusion, mit einer Erhitzungseinrichtung, durch die das Metallband hindurchgeführt ist, mit einer ersten Beschichtungsstation, an welcher eine Breitschlitzdüse zum direkten Auftrag des geschmolzenen thermoplastischen Kunststoffes in Farm eines Filmes auf die erste Seite des arhitzten Metallbandes und hinter der Breitschlitzdüse zwei aneinandergedrückte Rollen, zwischen denen das beschichtete Metallband durch einen zwischen beiden Rollen gebildeten Spalt hindurchführbar ist, vorgesehen sind, wobei zumindest die am Kunststoffilm anliegende und den Kunststoffilm an das Metallband andrückende Rolle, Laminatorrolle, kühlbar ist, und mit einer nachgeschalteten, gleichartigen Beschichtungsstation zur Beschichtung der zweiten Seite des Metallbandes, sowie mit einer nachgeschalteten Kühleinrichtung, **dadurch gekennzeichnet,** daß in Bandlaufrichtung jeder Laminatorrolle (5, 7) eine Rolle (7, 19) nachgeschaltet ist, die gegenüber der vorhergehenden Laminatorrolle so angeordnet ist, daß das Metallband (M) die vorhergehende Laminatorrolle an einem Teil ihres Umfanges umschlingt und das Metall-band mit dem zunächst noch flüssigen, an der Laminatorrolle anliegenden Kunststoffilm im Anschluß an den Spalt (6, 11) über einen Teil des Umfanges der Laminatorrolle in Anlage an diesem gehalten wird, wobei die der ersten Laminatorrolle (5) nachgeschaltete Rolle durch die zweite Laminatorrolle (7) gebildet ist, die zweite Laminatorrolle (7) an die erste Laminatorrolle (5) andrückbar ist und der zweite Spalt (11) zwischen den beiden Laminatorrollen (5, 7) gebildet ist.

14. Vorrichtung nach Anspruch 13, **dadurch gekennzeichnet,** daß die zweite Laminatorrolle (7) einen Mantel (7a) aus gummielastischem Material aufweist, der konzentrisch von einem dünnen, in radialer Richtung nachgiebigen, äußeren Stahlmantel (7b) umgeben ist.

15. Vorrichtung zur beidseitigen Kunststoffbeschichtung eines Metallbandes mittels Direkt-Extrusion, mit einer Erhitzungseinrichtung, durch die das Metallband hindurchgeführt ist, mit einer Beschichtungsstation, an welcher an jeder Seite des Metallbandes je eine Breitschlitzdüse zum direkten Auftrag des geschmolzenen thermoplastischen Kunststoffes in Form je eines Filmes auf die beiden Seiten des erhitzten Metallbandes vorgesehen ist, sowie mit einer nachgeschalteten Kühleinrichtung, **dadurch gekennzeichnet,** daß hinter den beiden Breitschlitzdüsen (21, 22) zwei aneinander drückbare, kühlbare Rollen, Laminatorrollen, (24, 25) angeordnet sind, zwischen denen das beidseitig beschichtete Metallband (M) durch einen zwischen beiden Laminatorrollen (24, 25) gebildeten Spalt (26) hindurchführbar ist, daß in Bandlaufrichtung der einen ersten Laminatorrolle (24) eine Umlenkrolle (23) nachgeschaltet ist, die gegenüber der ersten Laminatorrolle (24) so angeordnet ist, daß das Metallband (M) die erste Laminatorrolle an einem Teil ihres Umfanges umschlingt und das Metallband mit dem noch flüssigen, an der ersten Laminatorrolle (24) anliegenden ersten Kunststoffilm (27) im Anschluß an den Spalt (26) über einen Umfangsabschnitt der ersten Laminatorrolle (24) in Anlage an diesem gehalten wird, und daß ein endloses Laminatorband (28) über die zweite Laminatorrolle (25) und mehrere Umlenkrollen (29, 30) so geführt ist, daß das Laminatorband (28) die zweite Laminatorrolle (25) teilweise umschlingt, durch den Spalt (26) verläuft und dann die erste Laminatorrolle (24) zumindest in einem Teilbereich des vorgenannten Umfangsabschnittes umschlingt, damit es im Anschluß an den Spalt (26) von außen an dem zweiten Kunststoffilm (31) anliegt und den zweiten Kunststoffilm so lange an das Metallband (M) drückt bis dieser zumindest an seiner Oberfläche in einem festen Zustand abgekühlt ist.

16. Vorrichtung nach Anspruch 15, **dadurch gekennzeichnet,** daß das Laminatorband (28) aus Stahl besteht.

17. Vorrichtung nach Anspruch 15 oder 16, **dadurch gekennzeichnet,** daß die Umlenkrollen (29, 30) für das Laminatorband (28) kühlbar sind.

18. Vorrichtung nach Anspruch 15, **dadurch gekennzeichnet,** daß die zweite Laminatorrolle (25) einen gummielastischen Mantel (25a) aufweist.

19. Vorrichtung nach einem der Ansprüche 15 bis 18, **dadurch gekennzeichnet,** daß der ersten Laminatorrolle (24) eine Andrückrolle (32) zugeordnet ist, die in Umfangsrichtung der ersten Laminatorrolle (24) in größerem Abstand von dem zwischen beiden Laminatorrollen gebildeten Spalt (26) angeordnet ist, und daß die erste Breitschlitzdüse (21) vor diese Andrückrolle (32) in eine zweite Gießposition verstellbar ist, so daß das Stahlband (M) wahlweise über die Andrückrolle (32) und durch den zwischen dieser und der ersten Laminatorrolle (24) gebildeten Spalt (33) führbar ist, damit mittels der in der zweiten Gießposition befindlichen ersten Breitschlitzdüse (21) ein Kunststoffilm (27a) auf die eine Seite des Metallbandes (M) auftragbar ist, der eine höhere Schmelztemperatur aufweist als der Kunststoffilm (31), der an der Beschichtungsstation von der zweiten Breitschlitzdüse (22) auf die andere Seite des Metallbandes (M) extrudiert wird.

20. Vorrichtung nach Anspruch 13 oder 19, **dadurch gekennzeichnet,** daß die Schlitzbreite der Breitschlitzdüsen (2, 21) gräßer ist als die Breite des Metallbandes (M) und daß im Auftragsbereich des Kunststofffilmes (3, 27a) auf das Metallband und daran anschließend endlose Teflonbänder (12) vorgesehen sind, die mittels Umlenkrollen (13, 14) um die Andrückrolle (4, 32) um einen Teil des Umfanges der ersten Laminatorrolle (5, 24) beidseitig des Metallbandes (M) an dieses angrenzend geführt und synchron mit diesem bewegbar sind, um seitlich über das Metallband vorstehende Teile des Kunststoffilmes (3, 27a) aufzunehmen.

## Claims

1. Method for coating metal strip with plastic by means of direct extrusion in which the metal strip is moved in its longitudinal direction and heated, a film of melted thermoplastic plastic is applied directly to one side of the moving metal strip by means of a sheet die, this plastic film is pressed against the metal strip in that it is passed through a gap between two rolls of which the roll, laminator roll, in contact with the plastic film is kept below the melting temperature of the plastic, if necessary the other side of the metal strip is coated with a plastic film in a similar manner, and in a concluding further treatment the coated metal strip is heated to a temperature in the region of the melting temperature and finally cooled rapidly to a temperature below 40°C, characterised in that when coating a steel strip, this is heated to such a temperature that it exhibits a temperature lying at least 10°C above the melting point of the respective plastic in the area of application of the liquid plastic film, in that surface contact is produced between the roll, laminator roll, pressed against the plastic film or an endless belt, laminator belt, pressed against the plastic film, and this surface contact is maintained by synchronous further movement of the surfaces of the plastic film and laminator roll or laminator belt in contact with one another over a contact time or contact length which is sufficient with a strip speed of at least 50 m/min to cool at least the surface layer of the plastic film with a cooling rate of at most 400 W/m²°C to a temperature which lies at least 30°C below the melting point of the respective plastic before the contact between the plastic film and the laminator roll or laminator belt is ended.

2. Method according to claim 1, characterised in that the liquid plastic film is pressed against the steel strip by means of the laminator roll or the laminator belt with a force of at least 60 N/mm related to the breadth of the steel strip.

3. Method according to claim 1 or 3, characterised in that the steel strip with the plastic film in contact with the laminator roll is guided under tension around a part of the circumference of the laminator roll and held in contact on the laminator roll.

4. Method according to one of claims 1 to 3, characterised in that an endless laminator belt is guided under tension together with the coated steel strip around a part of the circumference of a roll, the plastic film to be cooled being in contact with the laminator belt.

5. Method according to claim 4, characterised in that a laminator belt made of steel is used.

6. Method according to one of claims 1 to 3, characterised in that the laminator roll is cooled by water which is passed through the roll.

7. Method according to claim 6, characterised in that the laminator rolls are kept at a temperature in the range from 20 to 80°C by cooling.

8. Method according to one of claims 1 to 7, characterised in that during the further treatment the steel strip is heated to a temperature above the melting point of the respective plastic and the plastic film is chilled to ambient temperature with a high cooling rate by introducing the steel strip directly into a water bath.

9. Method according to claim 8, characterised in that with homo PP the rapid cooling is carried out with a cooling rate of at least 3000 W/m²°C down to a temperature below 20°C.

10. Method according to claim 8, characterised in that with random PP the rapid cooling is carried out with a cooling rate of at least 1800 W/m²°C down to a temperature below 20°C.

11. Method according to one of claims 1 to 10, characterised in that when the steel strip is coated on both sides, the plastic film with the higher melting point is applied to the steel strip first.

12. Method according to one of claims 1 to 11, characterised in that the plastic is extruded from the sheet die with a breadth which is greater than the breadth of the steel strip, and in that at the two longitudinal edges of the steel strip endless Teflon belts are guided in synchronisation with the steel strip in the area of application and adjacent thereto until the portions of the plastic film projecting laterally beyond the steel strip are sufficiently cooled below the melting point.

13. Device for coating a metal strip with plastic on both sides by means of direct extrusion, with a heating device through which the metal strip is passed, with a first coating station which is provided with a sheet die for direct application of the melted thermoplastic plastic in the form of a film onto the first side of the heated metal strip, and behind the sheet die two rolls pressed against one another between which the coated metal strip can be passed through a gap formed between the two rolls, whereby at least the roll, laminator roll, in contact with the plastic film and pressing the plastic film against the metal strip can be cooled, and with a following similar coating station for coating the second side of the metal strip, and with a following cooling device, characterised in that in the direction in which the strip runs each laminator roll (5, 7) is followed by a roll (7, 19) which is arranged relative to the preceding laminator roll so that the metal strip (M) passes around the preceding laminator roll over a part of its circumference and the metal strip with the initially still liquid plastic film in contact with the laminator roll is kept in contact with the circumference of the laminator roll over a part thereof following the gap (6, 11) whereby the roll following the first laminator roll (5) is formed by the second laminator roll (7), the second laminator roll (7) can be pressed against the first laminator roll (5), and the second gap (11) is formed between the two laminator rolls (5, 7).

14. Device according to claim 13, characterised in that the second laminator roll (7) exhibits a surface (7a) of rubber elastic material which is surrounded concentrically by a thin outer steel surface (7b) which yields in the radial direction.

15. Device for coating a metal strip with plastic on both sides by means of direct extrusion, with a heating device through which the metal strip is passed, with a coating station in which a sheet die is provided on each side of the metal strip for direct application of the melted thermoplastic plastic in the form of a film onto the two sides of the heated metal strip, and with a following cooling device, characterised in that arranged behind the two sheet dies (21, 22) there are two coolable rolls, laminator rolls, which can be pressed against one another (24, 25), between which the metal strip (M) coated on both sides can be passed through a gap (26) formed between the two laminator rolls (24, 25), in that in the direction in which the strip runs the first laminator roll (24) is followed by a deflecting roll (23) which is arranged in relation to the first laminator roll (24) so that the metal strip (M) passes around the first laminator roll over a part of its circumference and the metal strip with the still liquid first plastic film (27) in contact with the first laminator roll (24) is kept in contact with the circumference of the first laminator roll (24) over a portion thereof following the gap (26), and in that an endless laminator belt (28) is guided over the second laminator roll (25) and a plurality of deflecting rolls (29, 30) so that the laminator belt (28) partly passes around the second laminator roll (25), runs through the gap (26) and then passes around the first laminator roll (24) at least in a part area of the portion of the circumference named previously so that following the gap (26) it bears from outside on the second plastic film (31) and presses the second plastic film against the metal strip (M) until the latter is cooled to a solid state at least at its surface.

16. Device according to claim 15, characterised in that the laminator belt (28) is made of steel.

17. Device according to claim 15 or 16, characterised in that the deflecting rolls (29, 30) for the laminator belt (28) can be cooled.

18. Device according to claim 15, characterised in that the second laminator roll (25) exhibits a rubber elastic surface (25a).

19. Device according to one of claims 15 to 18, characterised in that the first laminator roll (24) cooperates with a pressure roll (32) which is arranged in the circumferential direction of the first laminator roll (24) at a greater distance from the gap (26) formed between the two laminator rolls, and in that the first sheet die (21) in front of this pressure roll (32) can be set in a second pouring position so that the steel strip (M) can be guided optionally over the pressure roll (32) and through the gap (33) formed between the latter and the first laminator roll (24) so that a plastic film (27a) which exhibits a higher melting temperature than the plastic film (31) extruded onto the other side of the metal strip (M) by the second sheet die (22) in the coating station can be applied by means of the first sheet die (21) located in the second pouring position on this side of the metal strip (M).

20. Device according to claim 13 or 19, characterised in that the breadth of the slit of the sheet dies (2, 21) is greater than the breadth of the metal strip (M), and in that in the area of application of the plastic film (3, 27a) on the metal strip and adjacent thereto endless Teflon belts (12) are provided which are guided by means of deflecting rolls (13, 14) around the pressure roll (4, 32) around a part of the circumference of the first laminator roll (5, 24) on both sides of the metal strip (M) bordering the latter and can be moved in synchronisation with the latter in order to accommodate parts of the plastic film (3, 27a) projecting laterally beyond the metal strip.

## Revendications

1. Procédé pour revêtir de matière plastique une bande métallique par extrusion directe, selon lequel on déplace la bande métallique suivant sa direction longitudinale et on élève sa température, on applique directement un film de matière thermoplastique, à l'état fondu, sur une première face de la bande métallique déplacée, au moyen d'une buse à fente large, on applique sous pression ce film de matière plastique sur la bande métallique en la faisant passer par un intervalle existant entre deux rouleaux parmi lesquels on maintient le rouleau qui est en appui sur le film de matière plastique, rouleau de stratification, au-dessous de la température de fusion de la matière plastique, on revêt éventuellement d'une manière analogue l'autre face de la bande métallique d'un film de matière plastique et, dans un post-traitement qui suit, on élève la bande métallique revêtue à une température de l'ordre de la température de fusion et on la refroidit enfin brusquement à une température inférieure à 40 °C,
caractérisé
en ce que, lors d'un revêtement d'une bande d'acier, on élève celle-ci à une température telle que, dans la zone d'application du film de matière plastique à l'état liquide, elle comporte une température supérieure d'au moins 10 °C au point de fusion de la matière plastique chaque fois considérée,
en ce qu'un contact superficiel est provoqué entre le rouleau appliqué sous pression sur le film de matière plastique, rouleau de stratification, ou une bande sans fin appliquée sous pression sur le film de matière plastique, bande de stratification, et on maintient ce contact superficiel, au moyen d'une poursuite du déplacement synchrone des surfaces en contact du film de matière plastique et du rouleau de stratification ou de la bande de stratification, pendant une durée de contact ou sur l'étendue d'une longueur de contact qui suffit pour, dans le cas d'une vitesse de bande d'au moins 50 m/min, refroidir au moins la couche superficielle du film de matière plastique, à un taux de refroidissement d'au maximum 400 W/m² °C, jusqu'à une température qui est inférieure d'au moins 30 °C au point de fusion de la matière plastique chaque fois considérée, avant que le contact entre le film de matière plastique et le rouleau de stratification ou la bande de stratification ne soit supprimé.

2. Procédé suivant la revendication 1, caractérisé en ce que l'application sous pression du film de matière plastique liquide sur la bande d'acier au moyen du rouleau de stratification ou de la bande de stratification a lieu avec une force d'au moins 60 N/mm, rapportée à la largeur de la bande d'acier.

3. Procédé suivant la revendication 1 ou 3, caractérisé en ce qu'on fait passer sous tension la bande d'acier, avec le film de matière plastique en appui sur le rouleau de stratification, autour et sur une partie de la périphérie du rouleau de stratification et en ce qu'elle est maintenue en appui sur le rouleau de stratification.

4. Procédé suivant l'une des revendications 1 à 3, caractérisé en ce qu'on fait passer une bande sans fin de stratification sous tension, avec la bande d'acier revêtue, autour d'une partie de la périphérie d'un rouleau, le film en matière plastique qui se refroidit étant en appui sur la bande de stratification.

5. Procédé suivant la revendication 4, caractérisé ce qu'on utilise une bande de stratification en acier.

6. Procédé suivant l'une des revendications 1 à 3, caractérisé en ce que le refroidissement du rouleau de stratification s'effectue au moyen d'eau qui traverse le rouleau.

7. Procédé suivant la revendication 6, caractérisé en ce que les rouleaux de stratification sont maintenus par refroidissement à une température dans la fourchette de 20 à 80 °C.

8. Procédé suivant l'une des revendications 1 à 7, caractérisé en ce que, lors du traitement après-coup, la température de la bande d'acier est élevée à une valeur supérieure au point de fusion de la matière plastique chaque fois considérée et le film de matière plastique est soumis à une trempe avec un taux de refroidissement élevé jusqu'à la température ambiante au moyen d'une introduction directe de la bande d'acier dans un bain d'eau.

9. Procédé suivant la revendication 8, caractérisé en ce que, dans le cas d'un homopolymère de PP, le refroidissement brusque a lieu avec un taux de refroidissement d'au moins 3000 W/m² °C jusqu'à une température inférieure à 20°C.

10. Procédé suivant la revendication 8, caractérisé en ce que, dans le cas d'un copolymère statistique de PP, le refroidissement brusque a lieu avec un taux de refroidissement d'au moins 1800 W/m² °C jusqu'à une température inférieure à 20 °C.

11. Procédé suivant l'une des revendications 1 à 10, caractérisé en ce que, dans le cas d'un revêtement de la bande d'acier sur les deux faces, le film de matière plastique possédant le point de fusion plus élevé est déposé en premier sur la bande d'acier.

12. Procédé suivant l'une des revendications 1 à 11, caractérisé en ce que l'extrusion de la matière plastique à partir de la buse à fente large a lieu sur une largeur qui est supérieure à la largeur de la bande d'acier et en ce que, sur les deux bords longitudinaux de la bande d'acier, on fait passer des bandes sans fin de Téflon dans la zone de dépôt et à la suite de celle-ci, d'une manière synchronisée avec la bande d'acier, jusqu'à ce que les sections du film de matière plastique qui dépassent latéralement de la bande d'acier soient suffisamment refroidies au-dessous du point de fusion.

13. Dispositif pour revêtir de matière plastique une bande métallique sur les deux faces par extrusion directe, comprenant un dispositif d'élévation de température, à travers lequel la bande métallique passe, un premier poste de revêtement, auquel sont prévus une buse à fente large, servant au dépôt direct de la matière thermoplastique à l'état fondu sous forme d'un film sur la première face de la bande métallique dont la température a été élevée, et, en aval de la buse à fente large, deux rouleaux appliqués sous pression l'un sur l'autre entre lesquels il possible de faire passer la bande métallique revêtue par un intervalle formé entre les deux rouleaux, au moins le rouleau qui est en appui sur le film de matière plastique et applique sous pression le film de matière plastique sur la bande métallique, rouleau de stratification, pouvant être refroidi, et un poste de revêtement du même type, monté en aval, servant au revêtement de la seconde face de la bande métallique, ainsi qu'un dispositif de refroidissement monté en aval, caractérisé en ce qu'il est prévu, monté en aval de chaque rouleau de stratification (5, 7) suivant la direction de passage de la bande, un rouleau (7, 19) qui est disposé vis-à-vis du rouleau de stratification qui précède d'une manière telle que la bande métalliques (M) s'enroule sur le rouleau de stratification qui précède sur une partie de sa périphérie et la bande métallique, avec le film de matière plastique d'abord encore liquide qui est en appui sur le rouleau de stratification, est maintenue en appui, à la suite de l'intervalle (6, 11), sur le rouleau de stratification sur une partie de la périphérie de celui-ci, le rouleau monté en aval du premier rouleau de stratification (5) étant formé par le second rouleau de stratification (7), le second rouleau de stratification (7) pouvant être appliqué sous pression sur le premier rouleau de stratification (5) et le second intervalle (11) étant formé entre les deux rouleaux de stratification (5, 7).

14. Dispositif suivant la revendication 13, caractérisé en ce que le second rouleau de stratification (7) comporte une enveloppe (7a) en matière à élasticité du type caoutchouc qui est enveloppée d'une manière concentrique par une mince enveloppe d'acier (7b) extérieure, flexible suivant la direction radiale.

15. Dispositif pour revêtir de matière plastique une bande métallique sur les deux faces par extrusion directe, comprenant un dispositif d'élévation de température, à travers lequel la bande métallique passe, un poste de revêtement, auquel est prévu, sur chaque face de la bande métallique, une buse à fente large respective servant au dépôt direct de la matière thermoplastique à l'état fondu de sous forme d'un film respectif, sur chacune des deux faces de la bande métallique dont la température a été élevée, et un dispositif de refroidissement monté en aval, caractérisé en ce qu'il est prévu, disposés en aval des deux buses (21, 22) à fente large, deux rouleaux pouvant être appliqués sous pression l'un sur l'autre et pouvant être refroidis, rouleaux de stratification, (24, 25) entre lesquels il est possible de faire passer la bande métallique (M) revêtue sur les deux faces, par un intervalle (26) formé entre les deux rouleaux de stratification (24, 25), en ce qu'il est prévu, monté en aval d'un premier rouleau de stratification (24) suivant la direction de passage de la bande, un rouleau de renvoi (23) qui est disposé vis-à-vis du premier rouleau de stratification (24) d'une manière telle que la bande métallique (M) enveloppe le premier rouleau de stratification sur une partie de sa périphérie et la bande métallique, avec le premier film de matière plastique (27) encore liquide qui est en appui sur le premier rouleau de stratification (24), est maintenue, à la suite de l'intervalle (26), en appui sur le premier rouleau de stratification (24) sur une section périphérique de celui-ci, et en ce qu'une bande sans fin de stratification (28) passe sur le second rouleau de stratification (25) et plusieurs rouleaux de renvoi (29, 30) d'une manière telle que la bande de stratification (28) enveloppe partiellement le second rouleau de stratification (25), passe par l'intervalle (26) et enveloppe alors le premier rouleau de stratification (24) au moins sur une zone partielle de la susdite section périphérique afin qu'à la suite de l'intervalle (26), elle soit en appui de l'extérieur sur le second film de matière plastique (31) et applique sous pression le second film de matière plastique sur la bande métalliques (M) jusqu'à ce que celui-ci soit refroidi, au moins en surface, dans un état solide.

16. Dispositif suivant la revendication 15, caractérisé en ce que la bande de stratification (28) est en acier.

17. Dispositif suivant la revendication 15 ou 16, caractérisé en ce que les rouleaux de renvoi (29, 30) prévus pour la bande de stratification (28) peuvent être refroidis.

18. Dispositif suivant la revendication 15, caractérisé en ce que le second rouleau de stratification (25) comporte une enveloppe (25a) à élasticité du type caoutchouc.

19. Dispositif suivant l'une des revendications 15 à 18, caractérisé en ce qu'il est prévu, associé au premier rouleau de stratification (24), un rouleau d'application de pression (32) qui, suivant la direction périphérique du premier rouleau de stratification (24), est situé à une assez grande distance de l'intervalle (26) formé entre les deux rouleaux de stratification, et en ce que la première buse (21) à fente large est déplaçable en amont de ce rouleau d'application de pression (32) dans une seconde position de coulée, de sorte qu'il est possible de faire passer lorsqu'on le souhaite la bande d'acier (M) sur le rouleau d'application de pression (32) et par l'intervalle (33) formé entre celui-ci et le premier rouleau de stratification (24), afin qu'au moyen de la première buse (21) à fente large se trouvant dans la seconde position de coulée, il soit possible de déposer sur la première face de la bande métallique (M) un film de matière plastique (27a) qui possède une température de fusion plus élevée que le film de matière plastique (31) qui est extrudé, au poste de revêtement de la seconde buse (22) à fente large, sur l'autre face de la bande métallique (M).

20. Dispositif suivant la revendication 13 ou 19, caractérisé en ce que la largeur de fente des buses (2, 21) à fente large est supérieure à la largeur de la bande métallique (M) et en ce que, dans la zone de dépôt du film de matière plastique (3, 27a), il est prévu, sur la bande métallique et à la suite de celle-ci, des bandes sans fin (12) en Téflon qui, au moyen de rouleaux de renvoi (13, 14), passent, sur les deux côtés de la bande métalliques (M) et d'une manière adjacente à celle-ci, autour du rouleau d'application de pression (4, 32) et sur une partie de la périphérie du premier rouleau de stratification (5, 24), et peuvent être déplacées d'une manière synchronisée avec cette bande métallique (M), afin de prendre en charge des parties du film de matière plastique (3, 27a) qui dépassent latéralement de la bande métallique.
